# EUROPÄISCHE PATENTANMELDUNG

(11) **EP 3 024 076 A1**
(43) Veröffentlichungstag der Anmeldung: **25.05.2016**
(21) Anmeldenummer: 14193707.8
(22) Anmeldetag: 18.11.2014
(51) Int. Cl.: H01M 8/04, H01M 8/06, H01M 8/12

(54) **Einrichtung und Verfahren zur Versorgung einer Brennstoffzellenbatterie**

(71) Anmelder: Hexis AG, 8404 Winterthur (CH)
(72) Erfinder: Weiss, Vitalis, 78467 Konstanz (DE); Gamper, Thomas, 8253 Diessenhofen (CH); Schindler, Bernhard, 79100 Freiburg (DE); Denzler, Roland, 8484 Weisslingen (CH)
(74) Vertreter: Intellectual Property Services GmbH

(57) **Zusammenfassung**

Die Erfindung betrifft eine Einrichtung und ein Verfahren zur Versorgung einer Brennstoffzellenbatterie (11) mit Umgebungsluft und Erdgas.

Die Erfindung geht aus von einer Einrichtung, bei der ein Erdgasstrom über eine zweite Zuführleitung (15) in Abhängigkeit von einer Kenngrösse eines Umgebungsluftstroms über eine erste Zuführleitung (14) eingestellt wird.

Um einen hohen Gesamtwirkungsgrad eines die Brennstoffzellenbatterie (11) umfassenden Brennstoffzellensystems (10) bei Gewährleistung eines sicheren Betriebs zu ermöglichen, wird erfindungsgemäss vorgeschlagen, dass ein Ausgleichselement (25) in der zweiten Zuführleitung (15) angeordnet ist, das einen Einfluss von Druckschwankungen in einem hinteren Teil (38) der zweiten Zuführleitung (15) auf den Erdgasstrom zumindest teilweise ausgleicht.

## Beschreibung

Die Erfindung betrifft eine Einrichtung zur Versorgung einer Brennstoffzellenbatterie gemäss dem Oberbegriff des Anspruchs 1 und ein Verfahren zur Versorgung einer Brennstoffzellenbatterie gemäss dem Oberbegriff des Anspruchs 10.

Brennstoffzellen und damit auch Brennstoffzellenbatterien sind Elemente von Brennstoffzellensystemen und ermöglichen eine Nutzung von Energie eines Brennstoffs durch Energieumwandlung. Dabei können sowohl elektrische Energie, die aufgrund elektrochemischer Prozesse erzeugt wird, als auch thermische Energie, die in Form von heissen Abgasen der Prozesse anfällt, genutzt werden. Es werden dazu gasförmige Ströme zweier Edukte getrennt durch die Zellen geführt. Das erste Edukt, das insbesondere Umgebungsluft ist, enthält oxidierende Komponenten, das zweite Edukt reduzierende Komponenten. Als zweites Edukt wird insbesondere ein Methan enthaltendes Gas (z. B. Erdgas) verwendet, das vor dem Eintritt in die Zellen durch einen Reformer geführt und dort in die reduzierenden Komponenten Wasserstoff und Kohlenmonoxid umgewandelt wird.

Die Edukte werden in einem Mengenverhältnis in die Brennstoffzellenbatterie eingespeist, das mit der so genannten, auf die Stöchiometrie bezogenen Luftzahl (oder Luftverhältnis) λ charakterisiert wird. Damit im Abgasstrom keine reduzierenden Komponenten, also keine unverbrannten Komponenten des zweiten Edukts, mehr enthalten sind, muss gewährleistet sein, dass die Luftzahl λ immer grösser oder gleich 1 ist. Damit ist sichergestellt, dass immer genügend Sauerstoff zur vollständigen Oxidation des Wasserstoffs und des Kohlenmonoxids vorhanden und so ein sicherer Betrieb der Brennstoffzellenbatterie gewährleistet ist. Einerseits muss aus Sicherheitsgründen ein gewisser Sicherheitsabstand zu λ=1 eingehalten werden. Damit das die Brennstoffzellenbatterie enthaltende Brennstoffzellensystem einen möglichst hohen Gesamtwirkungsgrad aufweist, sollte die Luftzahl λ andererseits möglichst nahe bei 1 liegen, so dass der genannte Sicherheitsabstand zu λ =1 möglichst gering sein sollte.

In der EP 1 205 993 A1 wird eine Einrichtung und ein Verfahren zur Versorgung einer Brennstoffzellenbatterie mit einem ersten gasförmigen Edukt in Form von Umgebungsluft und einem zweiten gasförmigen Edukt in Form von Erdgas beschrieben. Die Einrichtung verfügt über eine erste Zuführleitung mit einem ersten pneumatischen Element zur Zuführung des ersten Edukts und eine zweite Zuführleitung zur Zuführung des zweiten Edukts. Mittels des ersten pneumatischen Elements ist wenigstens eine Kenngrösse des ersten Eduktstroms ableitbar, in deren Abhängigkeit ein in der zweiten Zuführleitung angeordnetes zweites pneumatisches Element den zweiten Eduktstrom so einstellt, dass die oben genannte Bedingung für die Luftzahl λ eingehalten wird.

Demgegenüber ist es insbesondere die Aufgabe der Erfindung, eine Einrichtung und ein Verfahren zur Versorgung einer Brennstoffzellenbatterie vorzuschlagen, welche einen hohen Wirkungsgrad der Brennstoffzellenbatterie bei Gewährleistung eines sicheren Betriebs ermöglichen. Erfindungsgemäß wird diese Aufgabe mit einer Einrichtung mit den Merkmalen des Anspruchs 1 und einem Verfahren mit den Merkmalen des Anspruchs 11 gelöst.

Die erfindungsgemässe Einrichtung zur Versorgung einer Brennstoffzellenbatterie weist eine erste Zuführleitung mit einem ersten pneumatischen Element zur Zuführung eines ersten gasförmigen Edukts in einem ersten Eduktstrom und eine zweite Zuführleitung zur Zuführung eines zweiten gasförmigen Edukts in einem zweiten Eduktstrom auf. Mittels des ersten pneumatischen Elements ist wenigstens eine Kenngrösse des ersten Eduktstroms ableitbar. In der zweiten Zuführleitung ist ein zweites pneumatisches Element angeordnet, welches dazu vorgesehen ist, den zweiten Eduktstrom in Abhängigkeit der genannten Kenngrösse des ersten Eduktstroms einzustellen.

Erfindungsgemäss ist bezüglich einer Strömungsrichtung des zweiten Eduktstroms gesehen hinter dem zweiten pneumatischen Element in der zweiten Zuführleitung ein Durchflussbegrenzungselement angeordnet, welches die zweite Zuführleitung in einen vorderen Teil, in dem das zweite pneumatischen Element angeordnet ist, und einen hinteren Teil aufteilt. Ausserdem ist in der zweiten Zuführleitung ein Ausgleichselement angeordnet, das dazu vorgesehen ist, einen Einfluss von Druckschwankungen im hinteren Teil der zweiten Zuführleitung auf den zweiten Eduktstrom zumindest teilweise auszugleichen.

Die genannten Druckschwankungen resultieren beispielsweise aus Schwankungen von Strömungsverlusten in der Brennstoffzellenbatterie und/oder aus Änderungen einer Absaugleistung eines Gebläses, welches die Abgase aus der Brennstoffzellenbatterie absaugt. Treten an einem Ausgang eines Durchflussbegrenzungselements, beispielsweise in Form einer Drossel oder einer Blende, Druckschwankungen auf, so schwankt bei gleichbleibenden Druck an einem Eingang des Durchflussbegrenzungselements der Durchfluss durch das Durchflussbegrenzungselement. Dies führt im vorliegenden Fall zu Schwankungen des zweiten Eduktstroms. Bei gleichbleibendem ersten Eduktstrom ändert sich damit ungewollt die oben beschriebene Luftzahl. Um wie oben beschrieben sicherstellen zu können, dass die Luftzahl λ immer grösser oder gleich 1 ist, muss der oben beschriebene Sicherheitsabstand auf die möglichen ungewollten Änderungen der Luftzahl λ angepasst werden. Je kleiner diese möglichen ungewollten Änderungen der Luftzahl λ sind, desto kleiner kann der genannte Sicherheitsabstand gewählt werden. Je kleiner der eingestellte Sicherheitsabstand ist, desto grösser ist der Gesamtwirkungsgrad des Brennstoffzellensystems.

Das Ausgleichselement gleicht einen Einfluss von Druckschwankungen im hinteren Teil der zweiten Zuführleitung auf den zweiten Eduktstrom zumindest teilweise aus, was eine sehr genaue Einstellung der Luftzahl λ ermöglicht und so die genannten möglichen Schwankungen der Luftzahl λ sehr klein machen. Dies ermöglicht wie beschrieben einen sehr kleinen Sicherheitsabstand und damit einen sehr hohen Gesamtwirkungsgrad des Brennstoffzellensystems. Gleichzeitig wird sichergestellt, dass die Luftzahl λ immer grösser oder gleich 1 ist, womit ein sicherer Betrieb der Brennstoffzellenbatterie gewährleistet wird.

Das erste Edukt ist insbesondere Umgebungsluft und das zweite Edukt ist insbesondere ein Methan enthaltendes Gas, wie beispielsweise Erdgas. Das Erdgas wird vor dem Eintritt in die Zellen durch einen Reformer geführt und dort in die reduzierenden Komponenten Wasserstoff und Kohlenmonoxid umgewandelt. Bei der nachfolgenden Beschreibung wird kein Unterschied zwischen den Strömen eines ursprünglichen Edukts und eines umgewandelten Edukts gemacht. Die Reformierungsprozesse werden in der Regel nicht mehr explizit genannt; sondern es wird stillschweigend vorausgesetzt, dass auch der Einsatz von Reformern vorgesehen ist.

Unter "zumindest teilweise ausgleichen" soll in diesem Zusammenhang verstanden werden, dass der Einfluss der Druckschwankungen durch das Ausgleichselement im Vergleich zu einer Vorrichtung ohne ein Ausgleichselement verringert, insbesondere so gering wie möglich gemacht wird. Ein vollständiger Ausgleich der genannten Druckschwankungen ist wünschenswert, kann aber nicht immer erreicht werden.

Die Brennstoffzellen sind insbesondere als Hochtemperatur-Brennstoffzellen des SOFC-Typs ("Solid Oxid Fuel Cell") ausgeführt.

Die genannte Kenngrösse des ersten Eduktstroms, in deren Abhängigkeit der zweite Eduktstrom eingestellt wird, kann beispielsweise als eine Durchflussmenge, ein Druck oder ein Druckabfall am ersten pneumatischen Element ausgeführt sein. Die Kenngrösse kann direkt gemessen werden oder wie beispielsweise eine Durchflussmenge aus anderen gemessenen Grössen, wie beispielsweise einem Druckabfall abgeleitet werden.

In Ausgestaltung der Erfindung ist das Ausgleichselement dazu vorgesehen, in einem Normalbetrieb einen Zwischen-Druck in der zweiten Zuführleitung zwischen dem ersten Durchflussbegrenzungselement und dem Ausgleichselement nicht unter einen Zwischen-Mindestdruck absinken zu lassen. Unter einem "Normalbetrieb" soll in diesem Zusammenhang verstanden werden, dass alle für den Betrieb der Brennstoffzellenbatterie notwendigen Komponenten fehlerfrei funktionieren und die Versorgung mit den Edukten gewährleistet ist. Durch die Sicherstellung eines Mindestdrucks am Ausgang des ersten Durchflussbegrenzungselements kann bei gegebenem Druck am Eingang des ersten Durchflussbegrenzungselements ein maximaler Durchfluss des zweiten Edukts durch das erste Durchflussbegrenzungselement sicher begrenzt werden. Damit ist es möglich, dass zu einem gegebenen ersten Edukt- also Umgebungsluftstrom ein maximaler zweiter Eduktstrom also insbesondere Erdgasstrom sichergestellt wird. Es ist somit nicht möglich, dass so viel Erdgas zugeführt wird, dass die Luftzahl λ unter 1 absinkt.

Der Zwischen-Mindestdruck kann beispielsweise zwischen 3 und 10 mbar, insbesondere 5 mbar betragen.

Das Ausgleichselement ist also als ein Element ausgeführt, das den Druck an seinem Eingang beeinflussen kann. Das Ausgleichselement kann dazu einen Drucksensor, der den Druck am Eingang des Ausgleichselements erfasst, ein Steuerelement und ein vom Steuerelement angesteuertes Ventil, mittels welchem ein Durchfluss durch das Ausgleichselement beeinflusst werden kann, aufweisen. Das Steuerelement ist dann so ausgeführt, dass es das genannte Ventil so ansteuert, dass sich am Eingang ein gewünschter Zwischendruck einstellt. Es ist aber ebenfalls möglich, dass das Ausgleichselement als ein Regelventil ausgeführt ist, bei dem der Eingangsdruck auf eine Regelfläche geführt wird und so ein gewünschter Eingangsdruck ohne aktive Ansteuerung durch ein Steuerelement eingestellt werden kann.

In Ausgestaltung der Erfindung ist das Ausgleichselement dazu vorgesehen, den Zwischen-Druck auf einen vorgebbaren Soll-Zwischen-Druck einzustellen. Der Soll-Zwischendruck kann dabei veränderlich sein, insbesondere von einer Durchflussmenge des ersten Eduktroms abhängig sein. Besonders vorteilhaft ist es, wenn der Zwischen-Mindestdruck konstant ist. Die Druckschwankungen im hinteren Teil der zweiten Zuführleitung haben damit keinen Einfluss auf den Druck am Ausgang des ersten Durchflussbegrenzungselements.

Damit kann die Druckdifferenz am ersten Durchflussbegrenzungselement besonders genau eingestellt werden, was eine besonders genaue Einstellung des zweiten Eduktroms und damit der Luftzahl λ ermöglicht. Die möglichen Schwankungen der Luftzahl λ sind damit besonders klein, so dass der genannte Sicherheitsabstand besonders klein gewählt werden kann.

Der Soll-Zwischen-Druck kann beispielsweise zwischen 3 und 10 mbar, insbesondere 5 mbar betragen.

Das Ausgleichselement kann auch so ausgeführt sein, dass es den Druck vor dem ersten Durchflussbegrenzungselement in Abhängigkeit der Druckschwankungen im hinteren Teil der zweiten Zuführleitung verändert und so deren Einfluss auf den zweiten Eduktstrom zumindest teilweise ausgleicht.

In Ausgestaltung der Erfindung ist die Kenngrösse des ersten Eduktroms, in deren Abhängigkeit der zweite Eduktstrom eingestellt wird, als eine Durchflussmenge durch das erste pneumatische Element ausgeführt. Dies ermöglicht eine besonders genaue Einstellung der Luftzahl λ.

In Ausgestaltung der Erfindung ist das erste pneumatische Element als ein Druckabfallerzeugungselement insbesondere als eine Düse, eine Drossel, ein so genanntes Laminarflowelement oder eine Blende und im Speziellen als eine Venturi-Düse ausgeführt. Damit kann auf einfache Weise aus einem Druckabfall am ersten pneumatischen Element auf die Durchflussmenge des ersten Eduktstroms durch das erste pneumatische Element geschlossen werden bzw. der Druckabfall als Mass für die Durchflussmenge genutzt werden. Die für die Einstellung des zweiten Eduktstroms notwendige Kenngrösse des ersten Eduktstroms lässt sich damit einfach und kostengünstig bestimmen. Wenn das erste pneumatische Element als eine Düse und insbesondere als eine Venturi-Düse ausgeführt ist, so ist der zweite Eingang des Überwachungselements insbesondere mit der ersten Zuführleitung innerhalb der Venturi-Düse verbunden. Die genannte Verbindung endet insbesondere an der engsten Stelle, dem so genannten Düsenhals der Venturi-Düse. Die Venturi-Düse kann auch einen den Düsenhals umgebenden Ringspalt aufweisen, in dem die genannte Verbindung enden kann. Wenn das erste pneumatische Element als eine Blende ausgeführt ist, dann ist der zweite Eingang des Überwachungselements mit der ersten Zuführleitung unmittelbar nach der Blende verbunden.

In Ausgestaltung der Erfindung ist das zweite pneumatische Element als ein Druckeinstellventil, insbesondere als ein Druckregelventil ausgeführt, welches an seinem Ausgang einen von einem Druckabfall am ersten pneumatischen Element und damit am zweiten Durchflussbegrenzungselement abhängigen Druck einstellt. Dies ermöglicht eine besonders genaue Einstellung der Luftzahl λ und ist ausserdem einfach und damit kostengünstig umsetzbar.

Das Druckeinstellventil ist insbesondere als ein Verhältnisdruckregler ausgeführt. Der Verhältnisdruckregler weist insbesondere ein Verhältnis zwischen Druckabfall am ersten pneumatischen Element und Druck am Ausgang des Verhältnisdruckreglers von 8:1 bis 15:1 und insbesondere 11:1 auf. Damit lassen sich die Arbeitsbereiche der verschiedenen Komponenten besonders gut aufeinander abstimmen.

In Ausgestaltung der Erfindung ist in der zweiten Zuführleitung ein Absperrelement zur Unterbrechung des zweiten Eduktstroms angeordnet. Damit lässt sich ein besonders sicherer Betrieb der Brennstoffzellenbatterie realisieren, da sich damit die Zufuhr des zweiten Edukts und damit des Methans einfach und schnell unterbrechen lässt.

Die genannte Aufgabe wird auch durch ein Verfahren zur Versorgung einer Brennstoffzellenbatterie mit einem ersten gasförmigen Eduktstrom und einem zweiten gasförmigen Eduktstrom gelöst, bei dem der erste Eduktstrom über eine erste Zuführleitung mit einem ersten pneumatischen Element und der zweite Eduktstrom über eine zweite Zuführleitung zugeführt wird. Mittels des ersten pneumatischen Elements wird wenigstens eine Kenngrösse des ersten Eduktstroms abgeleitet und der zweite Eduktstrom wird mittels eines in der zweiten Zuführleitung angeordneten zweiten pneumatischen Elements in Abhängigkeit der abgeleiteten Kenngrösse des ersten Eduktstroms eingestellt.

Erfindungsgemäss ist bezüglich einer Strömungsrichtung des zweiten Eduktstroms gesehen hinter dem zweiten pneumatischen Element in der zweiten Zuführleitung ein Durchflussbegrenzungselement angeordnet, welches die zweite Zuführleitung in einen vorderen Teil, in dem das zweite pneumatischen Element angeordnet ist, und einen hinteren Teil aufteilt. Mittels eines in der zweiten Zuführleitung angeordneten Ausgleichselements wird ein Einfluss von Druckschwankungen im hinteren Teil der zweiten Zuführleitung auf den zweiten Eduktstrom zumindest teilweise ausgeglichen.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

Dabei zeigt:

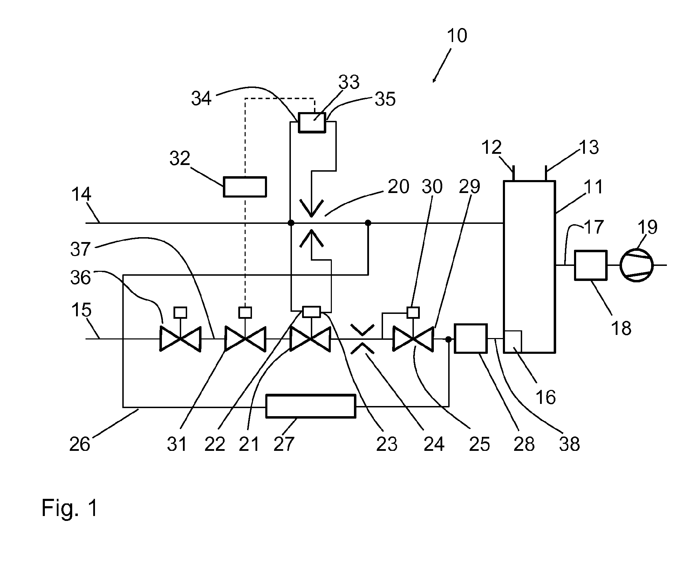

- Fig. 1: eine schematische Darstellung eines Brennstoffzellensystems mit einer Brennstoffzellenbatterie und einer Einrichtung zu deren Versorgung.

Gemäss Fig. 1 weist ein Brennstoffzellensystem 10 eine Brennstoffzellenbatterie 11 mit einer Reihe von nicht einzeln dargestellten Brennstoffzellen auf. In der Brennstoffzellenbatterie 11 erzeugte elektrische Energie kann über Pole 12, 13 abgeführt werden. Ein erstes gasförmiges Edukt in Form von Umgebungsluft wird über eine erste Zuführleitung 14 in einem ersten Eduktstrom der Brennstoffzellenbatterie 11 zugeführt. Ein zweites gasförmiges Edukt in Form von Erdgas wird der Brennstoffzellenbatterie 11 über eine zweite Zuführleitung 15 in einem zweiten Eduktstrom zugeführt. Das Erdgas wird zuerst von einem Reformer 16 in eine reaktionsfähige Form umgewandelt. Eine mit der elektrischen Energie gleichzeitig entstehende Abwärme wird in Form eines heissen Abgases als Abgasstrom aus der Brennstoffzellenbatterie 11 über eine Abgasleitung 17 einem Wärmetauscher 18 zugeführt, in dem dem Abgas die Wärmeenergie entzogen wird. Das so abgekühlte Abgas wird über ein Gebläse 19 angesaugt und an die Umgebung abgegeben.

In der ersten Zuführleitung 14 ist ein erstes pneumatisches Element in Form einer Venturi-Düse 20, also ein Druckabfallerzeugungselement, angeordnet. Über den Druckabfall an der Venturi-Düse 20 kann auf die Durchflussmenge des Umgebungsluftstroms und damit auf eine Kenngrösse des ersten Eduktstroms geschlossen werden, bzw. der Druckabfall ist ein Mass für die Durchflussmenge des Umgebungsluftstroms.

Zu einem gegebenen Umgebungsluftstrom muss ein passender Erdgasstrom, also ein zweiter Eduktstrom eingestellt werden. Der Erdgasstrom muss so eingestellt werden, dass die Luftzahl λ immer grösser als 1, aber trotzdem möglichst klein ist. Dazu ist in der zweiten Zuführleitung 15 ein zweites pneumatisches Element in Form eines Verhältnisdruckreglers 21, also ein Druckeinstellventil angeordnet. Ein erster Regel-Eingang 22 des Verhältnisdruckreglers 21 ist mit der ersten Zuführleitung 14 unmittelbar vor der Venturi-Düse 20 und ein zweiter Regel-Eingang 23 des Verhältnisdruckreglers 21 mit der ersten Zuführleitung 14 am engsten Querschnitt der Venturi-Düse 20 verbunden. Damit wird am Ausgang des Verhältnisdruckreglers 21 ein Druck eingeregelt, der in einem festgelegten Verhältnis zum Druckabfall an der Venturi-Düse 20 steht und damit von der Durchflussmenge des Umgebungsluftstroms abhängig ist. Das genannte Verhältnis beträgt beispielsweise 11:1.

Bezüglich der Strömungsrichtung des zweiten Eduktstroms zur Brennstoffzellenbatterie 11 gesehen hinter dem Verhältnisdruckregler 21 ist in der zweiten Zuführleitung 15 ein Durchflussbegrenzungselement in Form einer Düse 24 angeordnet. Die Düse 24 teilt die zweite Zuführleitung 15 in einen vorderen Teil 37, in dem der Verhältnisdruckregler 21 angeordnet ist, und einen hinteren Teil 38, der in Richtung Brennstoffzellenbatterie 11 angeordnet ist, auf. Der vom Verhältnisdruckregler 21 eingestellte Druck liegt damit am Eingang der Düse 24 an. In Strömungsrichtung hinter der Düse 24 ist ein Ausgleichselement 25 angeordnet, das ebenfalls vom Erdgasstrom durchströmt wird.

In Strömungsrichtung hinter dem Ausgleichselement 25 mündet eine Versorgungsleitung 26 in die zweite Zuführleitung 15, die von der ersten Zuführleitung 14 hinter der Venturi-Düse 20 abzweigt. In der Versorgungsleitung 26 sind weitere, für die vorliegende Erfindung nicht relevante Bauteile angeordnet, die hier als nur ein Bauteil 27 dargestellt sind. Über die Versorgungsleitung 26 wird Umgebungsluft zugeführt, die im Reformer 16 zur Umwandlung des Erdgases benötigt wird. In einem in Strömungsrichtung nach dem Einleiten der Umgebungsluft in die zweite Zuführleitung 15 angeordnetes Mischelements 28 wird das Erdgas und die Umgebungsluft vor der Einleitung in den Reformer 16 gemischt.

Unter anderem durch die Zuführung der Umgebungsluft und Änderungen der Drehzahl des Gebläses 19 kann es im hinteren Teil 38 der zweiten Zuführleitung 15 zu Druckschwankungen kommen, die vom Ausgleichselement 25 zumindest teilweise ausgeglichen werden.

Das Ausgleichselement 25 weist ein Ventil 29 auf, das von einem Steuerelement 30 angesteuert wird. Das Steuerelement 30 weist einen nicht separat dargestellten Drucksensor auf, mit dem ein Druck vor dem Ventil 29 gemessen werden kann. Dieser gemessene Druck liegt damit auch am Ausgang der Düse 24 an, dieser Druck kann auch als ein Zwischen-Druck bezeichnet werden. Das Steuerelement 30 kann das Ventil 29 so ansteuern, dass sich an dessen Eingang ein gewünschter Druck einstellt. Das Steuerelement 30 steuert das Ventil 29 insbesondere so an, dass der Zwischen-Druck nicht unter einen Zwischen-Mindestdruck von beispielsweise 5 mbar absinkt. Es ist auch möglich, dass das Steuerelement 30 das Ventil 29 so ansteuert, dass sich der Zwischen-Druck auf einen vorgebbaren, insbesondere konstanten Soll-Zwischen-Druck einstellt.

Alternativ zu der beschriebenen Ausführung des Ausgleichselements kann es auch als ein Regelventil ausgeführt sein, bei dem der Eingangsdruck auf eine Regelfläche geführt wird und so ein gewünschter Eingangsdruck ohne aktive Ansteuerung durch ein Steuerelement eingestellt werden kann.

In Strömungsrichtung vor dem Verhältnisdruckregler 21 ist in der zweiten Zuführleitung 15 ein Absperrelement in Form eines Absperrventils 31 angeordnet. Mittels des Absperrventils 31 kann die zweite Zuführleitung 15 abgesperrt und damit der Erdgasstrom unterbrochen werden. Damit kann eine schnelle und sichere Abschaltung der Brennstoffzellenbatterie 11 erreicht werden. Das Absperrventil 31 wird von einem Feuerungsautomaten 32 angesteuert, der mit einem Überwachungselement in Form eines Druckschalters 33 signalverbunden ist. Der Feuerungsautomat 32 ist ausserdem mit einer Vielzahl der beschriebenen Komponenten signalverbunden, wobei diese Verbindungen aus Übersichtlichkeitsgründen nicht dargestellt sind.

Der Druckschalter 33 ist parallel zur Venturi-Düse 20 angeordnet. Damit ist ein erster Eingang 34 des Druckschalters 33 mit der ersten Zuführleitung 14 unmittelbar vor der Venturi-Düse 20 und ein zweiter Eingang 35 des Druckschalters 33 mit der ersten Zuführleitung 14 am engsten Querschnitt der Venturi-Düse 20 verbunden. Sobald der Druckabfall an der Venturi-Düse 20 unter einen Schwellwert absinkt, erzeugt der Druckschalter 33 ein Fehlersignal, das vom Feuerungsautomat 32 empfangen wird. Als Folge davon steuert der Feuerungsautomat 32 das Absperrventil 31 so an, dass die zweite Zuführleitung 15 abgesperrt wird.

In Strömungsrichtung vor dem Absperrventil 31 ist in der zweiten Zuführleitung 15 ein Einstellventil 36 angeordnet. Mittels des Einstellventils 36 kann der Erdgasstrom beeinflusst werden. Ein derartiges Einstellventil ist nicht zwingend notwendig.

## Patentansprüche

1. Einrichtung zur Versorgung einer Brennstoffzellenbatterie (11) mit
- einer ersten Zuführleitung (14) mit einem ersten pneumatischen Element (20) zur Zuführung eines ersten gasförmigen Edukts in einem ersten Eduktstrom,
- einer zweiten Zuführleitung (15) zur Zuführung eines zweiten gasförmigen Edukts in einem zweiten Eduktstrom,
wobei
- mittels des ersten pneumatischen Elements (20) wenigstens eine Kenngrösse des ersten Eduktstroms ableitbar ist,
- in der zweiten Zuführleitung (15) ein zweites pneumatisches Element (21) angeordnet ist, welches dazu vorgesehen ist, den zweiten Eduktstrom in Abhängigkeit der genannten Kenngrösse des ersten Eduktstroms einzustellen,
**dadurch gekennzeichnet, dass**
- bezüglich einer Strömungsrichtung des zweiten Eduktstroms gesehen hinter dem zweiten pneumatischen Element (21) in der zweiten Zuführleitung (15) ein Durchflussbegrenzungselement (24) angeordnet ist, welches die zweite Zuführleitung (15) in einen vorderen Teil (37), in dem das zweite pneumatischen Element (21) angeordnet ist, und einen hinteren Teil (38) aufteilt und
- in der zweiten Zuführleitung (15) ein Ausgleichselement (25) angeordnet ist, das dazu vorgesehen ist, einen Einfluss von Druckschwankungen im hinteren Teil (38) der zweiten Zuführleitung (15) auf den zweiten Eduktstrom zumindest teilweise auszugleichen.

2. Einrichtung nach Anspruch 1,
**dadurch gekennzeichnet, dass**
das Ausgleichselement (25) dazu vorgesehen ist, in einem Normalbetrieb einen Zwischen-Druck in der zweiten Zuführleitung (15) zwischen dem ersten Durchflussbegrenzungselement (24) und dem Ausgleichselement (25) nicht unter einen Zwischen-Mindestdruck absinken zu lassen.

3. Einrichtung nach Anspruch 1 oder 2,
**dadurch gekennzeichnet, dass**
das Ausgleichselement (25) dazu vorgesehen ist, den Zwischen-Druck auf einen vorgebbaren Soll-Zwischen-Druck einzustellen.

4. Einrichtung nach Anspruch 1, 2 oder 3,
**dadurch gekennzeichnet, dass**
das Ausgleichselement (25) dazu vorgesehen ist, den Zwischen-Druck auf einen konstanten Soll-Zwischen-Druck einzustellen.

5. Einrichtung nach einem der Ansprüche 1 bis 4,
**dadurch gekennzeichnet, dass**
die Kenngrösse des ersten Eduktroms, in deren Abhängigkeit der zweite Eduktstrom eingestellt wird, als eine Durchflussmenge durch das erste pneumatische Element (20) ausgeführt ist.

6. Einrichtung nach Anspruch 5,
**dadurch gekennzeichnet, dass**
das erste pneumatische Element (20) als ein Druckabfallerzeugungselement , insbesondere als eine Venturi-Düse ausgeführt ist.

7. Einrichtung nach Anspruch 6,
**dadurch gekennzeichnet, dass**
das zweite pneumatische Element (21) als ein Druckeinstellventil ausgeführt ist, welches an seinem Ausgang einen von einem Druckabfall am ersten pneumatische Element (20) abhängigen Druck einstellt.

8. Einrichtung nach Anspruch 7,
**dadurch gekennzeichnet, dass**
das zweite pneumatische Element (21) als ein Verhältnisdruckregler ausgeführt ist.

9. Einrichtung nach einem der Ansprüche 1 bis 8,
**dadurch gekennzeichnet, dass**
in der zweiten Zuführleitung (15) ein Absperrelement (31) zur Unterbrechung des zweiten Eduktstroms angeordnet ist.

10. Verfahren zur Versorgung einer Brennstoffzellenbatterie (11) mit einem ersten gasförmigen Eduktstrom und einem zweiten gasförmigen Eduktstrom, wobei
- der erste Eduktstrom über eine erste Zuführleitung (14) mit einem ersten pneumatischen Element (20) zugeführt wird,
- der zweite Eduktstrom über eine zweite Zuführleitung (15) zugeführt wird,
- mittels des ersten pneumatischen Elements (20) wenigstens eine Kenngrösse des ersten Eduktstroms abgeleitet wird und
- der zweite Eduktstrom mittels eines in der zweiten Zuführleitung (15) angeordneten zweiten pneumatischen Elements (21) in Abhängigkeit der abgeleiteten Kenngrösse des ersten Eduktstroms eingestellt wird
**dadurch gekennzeichnet, dass**
- bezüglich einer Strömungsrichtung des zweiten Eduktstroms gesehen hinter dem zweiten pneumatischen Element (21) in der zweiten Zuführleitung (15) ein Durchflussbegrenzungselement (24) angeordnet ist, welches die zweite Zuführleitung (15) in einen vorderen Teil (37), in dem das zweite pneumatischen Element (21) angeordnet ist, und einen hinteren Teil (38) aufteilt und
- mittels eines in der zweiten Zuführleitung (15) angeordneten Ausgleichselements (25) ein Einfluss von Druckschwankungen im hinteren Teil (38) der zweiten Zuführleitung (15) auf den zweiten Eduktstrom zumindest teilweise ausgeglichen wird.
